# FASCICULE DE BREVET EUROPEEN

(11) **EP 4 438 485 B1**
(45) Date de publication et mention de la délivrance du brevet: **06.05.2026**
(21) Numéro de dépôt: 24166172.7
(22) Date de dépôt: 26.03.2024
(51) Int. Cl.: B64D 27/18, B64D 27/40

(54) **SYSTÈME CENTRAL DE FIXATION POUR AÉRONEF ASSURANT LA FIXATION D'UNE STRUCTURE D'UNE AILE À UNE STRUCTURE D'UN MÂT**
ZENTRALBEFESTIGUNGSSYSTEM FÜR EIN FLUGZEUG ZUR BEFESTIGUNG EINER FLÜGELSTRUKTUR AN EINER MASTSTRUKTUR
CENTRAL FIXATION SYSTEM FOR AN AIRCRAFT ENSURING THE FIXATION OF A WING STRUCTURE TO A MAST STRUCTURE

(30) Priorité: 29.03.2023 FR 2303011
(43) Date de publication de la demande: 02.10.2024
(73) Titulaire: AIRBUS OPERATIONS, 31060 Toulouse Cedex 9 (FR)
(72) Inventeur: BERJOT, Michael, 31060 Toulouse (FR); BONHOMME, Philippe, 31060 Toulouse (FR); TAVEAU, Paul-Adrien, 31060 Toulouse (FR)
(74) Mandataire: Cabinet Le Guen Maillet

(56) Documents cités:
- FR-A1- 3 041 935
- FR-A1- 3 044 297
- US-A- 6 095 456
- US-A1- 2018 346 137
- US-B2- 9 248 921

## Description

### DOMAINE TECHNIQUE

La présente invention se rapporte au domaine général de l'accrochage d'un turboréacteur sous la voilure d'un aéronef. Elle concerne en particulier un système central de fixation pour aéronef qui assure la fixation d'une structure d'une aile à une structure d'un mât de l'aéronef. La présente invention concerne également un aéronef équipé d'un tel système central de fixation.

### ÉTAT DE LA TECHNIQUE ANTÉRIEURE

Un aéronef de l'état de la technique comporte une aile, un mât fixé sous l'aile et un moteur, tel qu'un turboréacteur, fixé sous le mât.

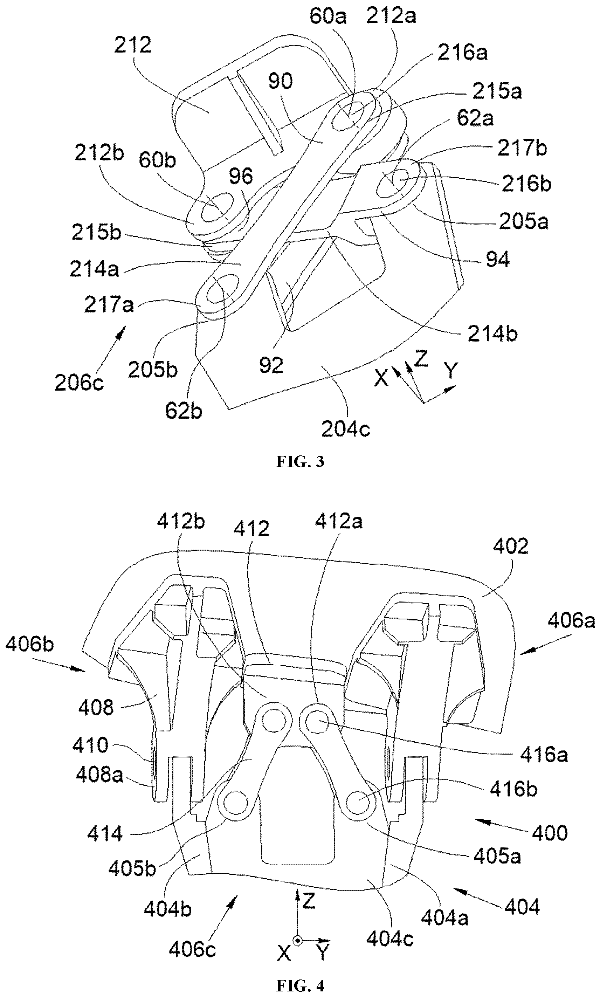

La Fig. 4 montre un exemple d'un ensemble de fixation 400 de l'état de la technique qui assure la fixation d'une structure 402 de l'aile à une structure 404 du mât. Le mât prend classiquement la forme d'un caisson qui comporte, entre autres, deux parois latérales 404a-b, à savoir une paroi latérale bâbord 404a et une paroi latérale tribord 404b et entre les parois latérales 404a-b, une première ferrure centrale 404c qui est globalement perpendiculaire auxdites parois latérales 404a-b et qui peut prendre la forme d'une paroi.

Dans l'exemple de la Fig. 4, l'ensemble de fixation 400 comporte deux fixations latérales 406a-b, à savoir une fixation latérale bâbord 406a et une fixation latérale tribord 406b, et un système central de fixation 406c.

Chaque fixation latérale 406a-b comporte une deuxième ferrure latérale 408 qui est fixée à la structure 402 de l'aile et qui présente une chape femelle 408a dans laquelle s'insère la paroi latérale 404a-b qui est du même côté. Pour chaque côté, la chape femelle 408a et la paroi latérale 404a-b associée sont solidarisées par un axe 410 traversant ladite chape femelle 408a et ladite paroi latérale 404a-b à travers des alésages prévus à cet effet.

Le système central de fixation 406c comporte une ferrure centrale 412 fixée à la structure 402 de l'aile et présentant deux chapes mâles 412a-b, et quatre bielles 414 réparties par paires. Pour chaque paire de bielles 414, les bielles 414 de la paire sont disposées de part et d'autre d'une chape mâle 412a-b pour former une chape femelle dans laquelle ladite chape mâle 412a-b est logée.

Le système central de fixation 406c comporte également la première ferrure centrale 404c formant deux chapes mâles 405a-b et pour chaque paire de bielles 414, les bielles 414 de la paire sont également disposées de part et d'autre de l'une des chapes mâles 405a-b de la première ferrure centrale 404c pour former une chape femelle dans laquelle ladite chape mâle 405a-b est logée. Il y a une paire de bielles 414 qui est disposée à bâbord et une à tribord. Pour chaque paire de bielles 414, il est prévu un axe 416a, 416b qui traverse les deux bielles 414 de la paire et selon le cas une chape mâle 412a-b de la ferrure centrale 412 ou une chape mâle 405a-b de la première ferrure centrale 404c à travers des alésages prévus à cet effet. Chaque paire de bielles 414 présente ainsi un premier point d'articulation au niveau de la chape mâle 412a-b de la ferrure centrale 412 et un deuxième point d'articulation au niveau de la chape mâle 405a-b de la première ferrure centrale 404c et les deux premiers points d'articulation sont rapprochés l'un de l'autre tandis que les deuxièmes points d'articulation sont éloignés l'un de l'autre.

Si un tel arrangement est performant, il est relativement encombrant selon la direction verticale.

Les documents US2018346137 et US9248921 divulguent des ensembles de fixation de moteur d'aéronef selon l'art antérieur. Ces ensembles de fixation comprenant notamment des fixations distinctes d'une section d'aile de l'aéronef, une fixation sur le mât du moteur, ainsi que des bielles de liaison des fixations de l'aile à la fixation du mât, ces bielles étant disposées de sorte à ne pas se croiser les unes avec les autres.

Le document FR3044297 divulgue un ensemble d'attaches moteur arrière comprenant une manille de reprise transversale des efforts, inclinée par rapport à la direction verticale et articulée sur une ferrure solidaire du moteur et sur une ferrure solidaire de la structure primaire. Au moins une manille de secours se croise avec cette manille, de façon à former ensemble un X en vue arrière.

### EXPOSÉ DE L'INVENTION

Un objet de la présente invention est de proposer un système central de fixation pour aéronef, où le système de fixation assure la fixation entre une structure d'une aile et une structure d'un mât, et où le système de fixation présente un dimensionnement vertical réduit par rapport à l'état de la technique.

À cet effet, est proposé un système central de fixation destiné à la fixation d'une structure d'une aile d'un aéronef à une structure d'un mât dudit aéronef, ledit système central de fixation présentant une direction longitudinale et comportant :
- une première ferrure centrale destinée à être solidaire de la structure de l'aile et présentant une première chape bâbord et une première chape tribord, où chaque première chape présente un alésage dont l'axe est parallèle à la direction longitudinale,
- une deuxième ferrure centrale destinée à être solidaire de la structure du mât et présentant une deuxième chape bâbord et une deuxième chape tribord, où chaque deuxième chape présente un alésage dont l'axe est parallèle à la direction longitudinale,
- un premier système de liaison et un deuxième système de liaison, chacun présentant une troisième chape et une quatrième chape, où chaque troisième et quatrième chapes présentent un alésage dont l'axe est parallèle à la direction longitudinale, où la troisième chape du premier système de liaison est montée articulée avec la première chape bâbord de la première ferrure centrale au niveau d'un premier point d'articulation à bâbord, où la troisième chape du deuxième système de liaison est montée articulée avec la première chape tribord de la première ferrure centrale au niveau d'un premier point d'articulation à tribord, où la quatrième chape du premier système de liaison est montée articulée avec la deuxième chape tribord de la deuxième ferrure centrale au niveau d'un deuxième point d'articulation à tribord, et où la quatrième chape du deuxième système de liaison est montée articulée avec la deuxième chape bâbord de la deuxième ferrure centrale au niveau d'un deuxième point d'articulation à bâbord, et
- pour chaque point d'articulation, un axe monté dans les alésages des chapes correspondantes.

Avec un tel arrangement, l'encombrement vertical est réduit par rapport à l'état de la technique. De plus, un tel arrangement favorise la tolérance aux dommages en isolant chaque point d'articulation.

Avantageusement, au moins l'un parmi le premier système de liaison et le deuxième système de liaison prend la forme de deux bielles disposées de part et d'autre de la première chape associée de la première ferrure centrale et de part et d'autre de la deuxième chape associée de la deuxième ferrure centrale, et ensemble, les deux bielles forment la troisième chape et la quatrième chape du système de liaison considéré.

Avantageusement, au moins l'un parmi le premier système de liaison et le deuxième système de liaison prend la forme d'une bielle dont au moins une première extrémité prend la forme d'une chape femelle et ladite chape femelle forme l'une parmi la troisième chape et la quatrième chape du système de liaison considéré.

Avantageusement, une deuxième extrémité de la bielle formée par l'un parmi le premier système de liaison et le deuxième système de liaison prend la forme d'une chape mâle et ladite chape mâle forme l'autre parmi la quatrième chape et la troisième chape du système de liaison considéré.

Avantageusement, une deuxième extrémité de la bielle formée par l'un parmi le premier système de liaison et le deuxième système de liaison prend la forme d'une chape femelle et ladite chape femelle forme l'autre parmi la quatrième chape et la troisième chape du système de liaison considéré.

Avantageusement, au moins l'un parmi le premier système de liaison et le deuxième système de liaison prend la forme d'une bielle dont chaque extrémité prend la forme d'une chape mâle et l'une des chapes mâles forme l'une parmi la troisième chape et la quatrième chape du système de liaison considéré, et l'autre des chapes mâles forme l'autre parmi la quatrième chape et la troisième chape du système de liaison considéré.

L'invention propose également un aéronef comportant une aile avec une structure, un mât avec une structure et un système de fixation selon l'une des variantes précédentes, où la première ferrure centrale est solidaire de la structure de l'aile et où la deuxième ferrure centrale est solidaire de la structure du mât.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 représente une vue de côté d'un aéronef selon l'invention,
Fig. 2 est une vue en perspective d'un ensemble de fixation comportant un exemple d'un système central de fixation selon l'invention,
Fig. 3 est une vue en perspective d'un exemple d'un système central de fixation selon l'invention, et
Fig. 4 est une vue en perspective d'un ensemble de fixation de l'état de la technique.

### EXPOSÉ DÉTAILLÉ DE MODES DE RÉALISATION

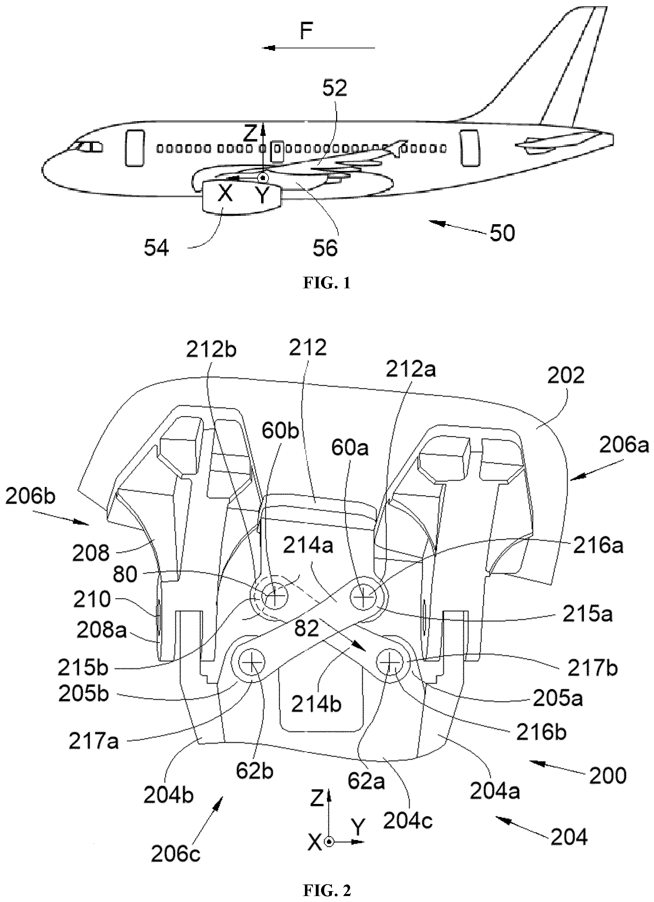

La Fig. 1 montre un aéronef 50 qui présente une aile 52 sous laquelle est monté un moteur 54 tel qu'un turboréacteur. Le moteur 54 est monté par l'intermédiaire d'un mât 56 qui présente une structure fixée entre une structure de l'aile 52 et une structure du moteur 54.

Par convention, on appelle X la direction longitudinale du mât 54, cette direction X étant parallèle à un axe longitudinal de l'aéronef 50. D'autre part, on appelle Y la direction transversale du mât 56 qui est horizontale lorsque l'aéronef 50 est au sol, et Z la direction verticale ou hauteur verticale lorsque l'aéronef 50 est au sol, ces trois directions X, Y et Z étant orthogonales entre elles.

D'autre part, les termes " avant " et " arrière " sont à considérer par rapport à une direction d'avancement de l'aéronef 50 lors du fonctionnement du moteur 54, cette direction étant représentée schématiquement par la flèche F. Les termes « bâbord » et « tribord » sont également à considérer par rapport à la direction d'avancement F de l'aéronef 50 et par rapport à la direction longitudinale X.

La Fig. 2 montre un exemple d'un ensemble de fixation 200 selon l'invention, qui assure la fixation de la structure 202 de l'aile 52 à la structure 204 du mât 56. Le mât 56 prend par exemple la forme d'un caisson et il comporte, entre autres, deux parois latérales 204a-b, à savoir une paroi latérale bâbord 204a et une paroi latérale tribord 204b et entre les parois latérales 204a-b, une ferrure centrale 204c, dite deuxième ferrure centrale 204c, qui est globalement perpendiculaire auxdites parois latérales 204a-b et fixée entre elles. La deuxième ferrure centrale 204c est globalement perpendiculaire à la direction longitudinale X et les parois latérales 204a-b sont globalement parallèles à un plan médian XZ du mât 56. La deuxième ferrure centrale 204c peut prendre la forme d'une paroi constituant une nervure intérieure du mât 56. La deuxième ferrure centrale 204c est ainsi solidaire de la structure 204 du mât 56.

Dans l'exemple de la Fig. 2, l'ensemble de fixation 200 comporte deux fixations latérales 206a-b, à savoir une fixation latérale bâbord 206a et une fixation latérale tribord 206b, et un système central de fixation 206c selon l'invention qui assure la fixation de la structure 202 de l'aile 52 à la structure 204 du mât 56.

Chaque fixation latérale 206a-b est ici identique aux fixations latérales de l'état de la technique. Les fixations latérales 206a-b sont données ici à titre d'exemple mais ne font pas partie de l'invention, et servent juste à donner un exemple d'implémentation de l'invention. Chaque fixation latérale 206a-b comporte une ferrure latérale 208 qui est fixée à la structure 202 de l'aile 52 et qui présente une chape femelle 208a dans laquelle s'insère la paroi latérale 204a-b du mât 56 qui est du même côté. Pour chaque côté, la chape femelle 208a et la paroi latérale 204a-b associée sont solidarisées par un axe 210 traversant ladite chape femelle 208a et ladite paroi latérale 204a-b à travers des alésages prévus à cet effet.

La Fig. 3 montre le système central de fixation 206c selon un mode de réalisation particulier de l'invention.

La direction X est également une direction longitudinale X pour le système central de fixation 206c qui comporte une première ferrure centrale 212 solidaire de la structure 202 de l'aile 52 et présentant deux premières chapes 212a-b, à savoir 212a une à bâbord et une 212b à tribord. La première ferrure centrale 212 est formée en une seule pièce, de sorte à correspondre à une seule et unique première ferrure centrale 212.

Le système central de fixation 206c comporte également la deuxième ferrure centrale 204c présentant deux deuxièmes chapes 205a-b, à savoir une 205a à bâbord et une 205b à tribord.

Le système central de fixation 206c comporte également deux systèmes de liaison 214a-b, à savoir un premier système de liaison 214a et un deuxième système de liaison 214b. Chaque système de liaison 214a-b présente une troisième chape 215a-b et une quatrième chape 217a-b. Les systèmes de liaison 214a-b assurent le transfert des efforts transverses appliqués au mât 56.

Chaque première chape 212a-b est fixée de manière articulée à une troisième chape 215a-b de manière à former un premier point d'articulation, à savoir un premier point d'articulation 60a à bâbord pour la première chape bâbord 212a, et un premier point d'articulation 60b à tribord pour la première chape tribord 212b.

Chaque deuxième chape 205a-b est fixée de manière articulée à une quatrième chape 217b-a de manière à former un deuxième point d'articulation, à savoir un deuxième point d'articulation 62a à bâbord pour la deuxième chape bâbord 205a, et un deuxième point d'articulation 62b à tribord pour la deuxième chape tribord 205b.

Le premier système de liaison 214a est ainsi fixé de manière articulée entre le premier point d'articulation 60a à bâbord et le deuxième point d'articulation 62b à tribord, et le deuxième système de liaison 214b est ainsi fixé de manière articulée entre le premier point d'articulation 60b à tribord et le deuxième point d'articulation 62a à bâbord.

En d'autres termes, la troisième chape 215a du premier système de liaison 214a est montée articulée avec la première chape bâbord 212a de la première ferrure centrale 212 au niveau du premier point d'articulation 60a à bâbord, la troisième chape 215b du deuxième système de liaison 214b est montée articulée avec la première chape tribord 212b de la première ferrure centrale 212 au niveau du premier point d'articulation 60b à tribord, la quatrième chape 217a du premier système de liaison 214a est montée articulée avec la deuxième chape tribord 205b de la deuxième ferrure centrale 204c au niveau du deuxième point d'articulation 62b à tribord, et la quatrième chape 217b du deuxième système de liaison 214b est montée articulée avec la deuxième chape bâbord 205a de la deuxième ferrure centrale 204c au niveau du deuxième point d'articulation 62a à bâbord.

Les deux systèmes de liaison 214a-b sont donc croisés et en fonction de l'angle au niveau du croisement, l'encombrement vertical peut être réduit par rapport à l'état de la technique. En particulier, en écartant latéralement les premiers points d'articulation 60a-b l'un de l'autre et les deuxièmes points d'articulation 62a-b l'un de l'autre, l'angle au niveau du croisement se réduit.

Au niveau de chaque point d'articulation du système central de fixation 206c, la fixation entre deux chapes est réalisée par un axe 216a-b traversant chaque chape considérée à travers des orifices prévus à cet effet et chaque point d'articulation correspond à un axe qui est parallèle à la direction longitudinale X. Chaque chape 212a-b, 205a-b, 215a-b, 217a-b du système central de fixation 206c présente ainsi un alésage dont l'axe est parallèle à la direction longitudinale X.

Dans le mode de réalisation de l'invention présenté à la Fig. 3, le premier système de liaison 214a prend la forme de deux bielles 90 et 92 disposées de part et d'autre de la première chape bâbord 212a de la première ferrure centrale 212 et de part et d'autre de la deuxième chape tribord 205b de la deuxième ferrure centrale 204c. Ensemble, les deux bielles 90 et 92 forment la troisième chape 215a et la quatrième chape 217a du premier système de liaison 214a et ce sont des chapes dites femelles. La première chape bâbord 212a de la première ferrure centrale 212 et la deuxième chape tribord 205b de la deuxième ferrure centrale 204c forment chacune une chape dite mâle qui s'insère dans la chape femelle correspondante.

Une chape femelle prend la forme d'un étrier avec deux parois parallèles, où chacune est traversée par un alésage pour la mise en place de l'axe. Une chape mâle prend la forme d'une paroi traversée par un alésage pour la mise en place de l'axe.

Dans le mode de réalisation de l'invention présenté à la Fig. 3, le deuxième système de liaison 214b prend la forme d'une bielle dont une première extrémité prend la forme d'une chape femelle 94 avec deux parois parallèles et dont l'autre extrémité prend la forme d'une chape mâle 96. Ici, ladite chape femelle 94 forme la quatrième chape 217b du deuxième système de liaison 214b et la chape mâle 96 forme la troisième chape 215b du deuxième système de liaison 214b. La deuxième chape bâbord 205a de la deuxième ferrure centrale 204c forme alors une chape mâle qui s'insère dans la chape femelle 94 du deuxième système de liaison 214b. La première chape tribord 212b de la première ferrure centrale 212 forme alors une chape femelle dans laquelle s'insère la chape mâle 96 du deuxième système de liaison 214b. Dans le mode de réalisation de l'invention présenté à la Fig. 3, la bielle formant le deuxième système de liaison 214b est insérée entre les deux bielles 90 et 92 formant le premier système de liaison 214a.

En cas de rupture au niveau de l'un des systèmes de liaison 214a-b, il est nécessaire d'assurer la continuité du transfert des efforts vers l'aile 52.

Avec un tel arrangement, si l'une des bielles 90, 92 du premier système de liaison 214a est rompue, elle est compensée par l'autre bielle 92, 90. Si les deux bielles 90, 92 du premier système de liaison 214a sont rompues, elles sont compensées par la bielle du deuxième système de liaison 214b. Si la bielle du deuxième système de liaison 214b est rompue, elle est compensée par les bielles 90, 92 du premier système de liaison 214a.

D'autres modes de réalisation (non représentés) sont envisageables à partir du mode de réalisation représenté à la Fig. 3.

Par exemple, le deuxième système de liaison 214b peut également prendre la forme de deux bielles disposées de part et d'autre de la première chape tribord 212b de la première ferrure centrale 212 et de part et d'autre de la deuxième chape 205a de la deuxième ferrure centrale 204c, pour former ensemble la troisième chape 215b et la quatrième chape 217b du deuxième système de liaison 214b.

Ainsi d'une manière générale, au moins l'un parmi le premier système de liaison 214a et le deuxième système de liaison 214b prend la forme de deux bielles 90 et 92 disposées de part et d'autre de la première chape 212a-b associée de la première ferrure centrale 212 et de part et d'autre de la deuxième chape 205b-a associée de la deuxième ferrure centrale 204c, et ensemble, les deux bielles 90 et 92 forment la troisième chape 215a-b et la quatrième chape 217a-b du système de liaison 214a-b considéré.

Chaque première chape 212a-b de la première ferrure centrale 212 et chaque deuxième chape 205a de la deuxième ferrure centrale 204c qui sont concernées prennent chacune la forme d'une chape mâle qui s'insère dans la chape femelle considérée.

Dans le cas où les deux systèmes de liaison 214a-b sont constitués de deux bielles 90 et 92, les bielles sont décalées le long de la direction longitudinale X, avec une bielle d'un premier système de liaison 214a-b, puis une bielle d'un deuxième système de liaison 214b-a, puis une bielle du premier système de liaison 214a-b, puis une bielle du deuxième système de liaison 214b-a.

Par exemple, le premier système de liaison 214a peut également prendre la forme d'une bielle dont une première extrémité prend la forme d'une chape femelle et dont la deuxième extrémité prend la forme d'une chape mâle.

Pour le premier système de liaison 214a comme pour le deuxième système de liaison 214b, les positions de la chape mâle et de la chape femelle peuvent être inversées par rapport à la première ferrure centrale 212 et à la deuxième ferrure centrale 204c.

Ainsi, d'une manière générale, au moins l'un parmi le premier système de liaison 214a et le deuxième système de liaison 214b prend la forme d'une bielle dont une première extrémité prend la forme d'une chape femelle 94 et dont l'autre extrémité prend la forme d'une chape mâle 96 et ladite chape femelle 94 forme l'une parmi la troisième chape 215a-b et la quatrième chape 217a-b du système de liaison 214a-b considéré, et ladite chape mâle 96 forme l'autre parmi la quatrième chape 217a-b et la troisième chape 215a-b du système de liaison 214a-b considéré.

Chaque première chape 212a-b de la première ferrure centrale 212 et chaque deuxième chape 205a de la deuxième ferrure centrale 204c qui sont concernées prennent chacune la forme appropriée, c'est-à-dire une chape mâle lorsqu'elle coopère avec une chape femelle et inversement.

Par exemple, une bielle peut avoir une chape femelle à chaque extrémité. Ainsi, pour le deuxième système de liaison 214b, chaque extrémité prend la forme d'une chape femelle et l'une forme la quatrième chape 217b du deuxième système de liaison 214b et l'autre forme la troisième chape 215b du deuxième système de liaison 214b. La deuxième chape bâbord 205a de la deuxième ferrure centrale 204c forme alors une chape mâle qui s'insère dans l'une des chapes femelles du deuxième système de liaison 214b et la première chape tribord 212b de la première ferrure centrale 212 forme alors une chape mâle qui s'insère l'autre des chapes femelles du deuxième système de liaison 214b.

Ainsi, d'une manière générale, au moins l'un parmi le premier système de liaison 214a et le deuxième système de liaison 214b prend la forme d'une bielle dont chaque extrémité prend la forme d'une chape femelle et l'une des chapes femelles forme l'une parmi la troisième chape 215a-b et la quatrième chape 217a-b du système de liaison 214a-b considéré, et l'autre des chapes femelles forme l'autre parmi la quatrième chape 217a-b et la troisième chape 215a-b du système de liaison 214a-b considéré.

Chaque première chape 212a-b de la première ferrure centrale 212 et chaque deuxième chape 205a de la deuxième ferrure centrale 204c qui sont concernées prennent chacune la forme d'une chape mâle pour coopérer avec une chape femelle.

Par exemple, une bielle peut avoir une chape mâle à chaque extrémité. Ainsi, pour le deuxième système de liaison 214b, chaque extrémité prend la forme d'une chape mâle et l'une forme la quatrième chape 217b du deuxième système de liaison 214b et l'autre forme la troisième chape 215b du deuxième système de liaison 214b. La deuxième chape bâbord 205a de la deuxième ferrure centrale 204c forme alors une chape femelle dans laquelle s'insère l'une des chapes mâles du deuxième système de liaison 214b et la première chape tribord 212b de la première ferrure centrale 212 forme alors une chape femelle dans laquelle s'insère l'autre des chapes mâles du deuxième système de liaison 214b.

Ainsi, d'une manière générale, au moins l'un parmi le premier système de liaison 214a et le deuxième système de liaison 214b prend la forme d'une bielle dont chaque extrémité prend la forme d'une chape mâle et l'une des chapes mâles forme l'une parmi la troisième chape 215a-b et la quatrième chape 217a-b du système de liaison 214a-b considéré, et l'autre des chapes mâles forme l'autre parmi la quatrième chape 217a-b et la troisième chape 215a-b du système de liaison 214a-b considéré.

Chaque première chape 212a-b de la première ferrure centrale 212 et chaque deuxième chape 205a de la deuxième ferrure centrale 204c qui sont concernées prennent chacune la forme d'une chape femelle pour coopérer avec une chape mâle.

## Revendications

1. Système central de fixation (206c) destiné à la fixation d'une structure (202) d'une aile (52) d'un aéronef (50) à une structure (204) d'un mât (56) dudit aéronef (50), ledit système central de fixation (206c) présentant une direction longitudinale (X) et comportant :
- une première ferrure centrale (212) destinée à être solidaire de la structure (202) de l'aile (52) et présentant une première chape bâbord (212a) et une première chape tribord (212b), où chaque première chape (212a-b) présente un alésage dont l'axe est parallèle à la direction longitudinale (X),
- une deuxième ferrure centrale (204c) destinée à être solidaire de la structure (204) du mât (56) et présentant une deuxième chape bâbord (205a) et une deuxième chape tribord (205b), où chaque deuxième chape (205a-b) présente un alésage dont l'axe est parallèle à la direction longitudinale (X),
- un premier système de liaison (214a) et un deuxième système de liaison (214b), chacun présentant une troisième chape (215a-b) et une quatrième chape (217a-b), où chaque troisième et quatrième chapes (215a-b, 217a-b) présentent un alésage dont l'axe est parallèle à la direction longitudinale (X), où la troisième chape (215a) du premier système de liaison (214a) est montée articulée avec la première chape bâbord (212a) de la première ferrure centrale (212) au niveau d'un premier point d'articulation (60a) à bâbord, où la troisième chape (215b) du deuxième système de liaison (214b) est montée articulée avec la première chape tribord (212b) de la première ferrure centrale (212) au niveau d'un premier point d'articulation (60b) à tribord, où la quatrième chape (217a) du premier système de liaison (214a) est montée articulée avec la deuxième chape tribord (205b) de la deuxième ferrure centrale (204c) au niveau d'un deuxième point d'articulation (62b) à tribord, et où la quatrième chape (217b) du deuxième système de liaison (214b) est montée articulée avec la deuxième chape bâbord (205a) de la deuxième ferrure centrale (204c) au niveau d'un deuxième point d'articulation (62a) à bâbord, et
- pour chaque point d'articulation (60a-b, 62a-b), un axe (216a-b) monté dans les alésages des chapes correspondantes.

2. Système central de fixation (206c) selon la revendication 1, **caractérisé en ce qu'**au moins l'un parmi le premier système de liaison (214a) et le deuxième système de liaison (214b) prend la forme de deux bielles (90, 92) disposées de part et d'autre de la première chape (212a-b) associée de la première ferrure centrale (212) et de part et d'autre de la deuxième chape (205b-a) associée de la deuxième ferrure centrale (204c), et **en ce qu'**ensemble, les deux bielles (90, 92) forment la troisième chape (215a-b) et la quatrième chape (217a-b) du système de liaison (214a-b) considéré.

3. Système central de fixation (206c) selon l'une des revendications 1 ou 2, **caractérisé en ce qu'**au moins l'un parmi le premier système de liaison (214a) et le deuxième système de liaison (214b) prend la forme d'une bielle dont au moins une première extrémité prend la forme d'une chape femelle (94) et **en ce que** ladite chape femelle (94) forme l'une parmi la troisième chape (215a-b) et la quatrième chape (217a-b) du système de liaison (214a-b) considéré.

4. Système central de fixation (206c) selon la revendication 3, **caractérisé en ce qu'**une deuxième extrémité de la bielle formée par l'un parmi le premier système de liaison (214a) et le deuxième système de liaison (214b) prend la forme d'une chape mâle (96) et **en ce que** ladite chape mâle (96) forme l'autre parmi la quatrième chape (217a-b) et la troisième chape (215a-b) du système de liaison (214a-b) considéré.

5. Système central de fixation (206c) selon la revendication 3, **caractérisé en ce qu'**une deuxième extrémité de la bielle formée par l'un parmi le premier système de liaison (214a) et le deuxième système de liaison (214b) prend la forme d'une chape femelle et **en ce que** ladite chape femelle forme l'autre parmi la quatrième chape (217a-b) et la troisième chape (215a-b) du système de liaison (214a-b) considéré.

6. Système central de fixation (206c) selon l'une des revendications 1 à 5, **caractérisé en ce qu'**au moins l'un parmi le premier système de liaison (214a) et le deuxième système de liaison (214b) prend la forme d'une bielle dont chaque extrémité prend la forme d'une chape mâle et **en ce que** l'une des chapes mâles forme l'une parmi la troisième chape (215a-b) et la quatrième chape (217a-b) du système de liaison (214a-b) considéré, et l'autre des chapes mâles forme l'autre parmi la quatrième chape (217a-b) et la troisième chape (215a-b) du système de liaison (214a-b) considéré.

7. Aéronef (50) comportant une aile (52) avec une structure (202), un mât (56) avec une structure (204) et un système de fixation selon l'une des revendications précédentes, où la première ferrure centrale (212) est solidaire de la structure (202) de l'aile (52) et où la deuxième ferrure centrale (204c) est solidaire de la structure (204) du mât (56).

## Patentansprüche

1. Zentrales Befestigungssystem (206c), das zur Befestigung einer Struktur (202) einer Tragfläche (52) eines Luftfahrzeugs (50) an einer Struktur (204) eines Pylons (56) des Luftfahrzeugs (50) bestimmt ist, wobei das zentrale Befestigungssystem (206c) eine Längsrichtung (X) aufweist und umfasst:
- ein erstes zentrales Beschlagteil (212), das dazu bestimmt ist, mit der Struktur (202) der Tragfläche (52) fest verbunden zu sein, und ein erstes backbordseitiges Gabelstück (212a) und ein erstes steuerbordseitiges Gabelstück (212b) aufweist, wobei jedes erste Gabelstück (212a-b) eine Bohrung aufweist, deren Achse parallel zur Längsrichtung (X) ist,
- ein zweites zentrales Beschlagteil (204c), das dazu bestimmt ist, mit der Struktur (204) des Pylons (56) fest verbunden zu sein, und ein zweites backbordseitiges Gabelstück (205a) und ein zweites steuerbordseitiges Gabelstück (205b) aufweist, wobei jedes zweite Gabelstück (205a-b) eine Bohrung aufweist, deren Achse parallel zur Längsrichtung (X) ist,
- ein erstes Verbindungssystem (214a) und ein zweites Verbindungssystem (214b), die jeweils ein drittes Gabelstück (215a-b) und ein viertes Gabelstück (217ab) aufweisen, wobei jedes dritte und vierte Gabelstück (215a-b, 217a-b) eine Bohrung aufweist, deren Achse parallel zur Längsrichtung (X) ist, wobei das dritte Gabelstück (215a) des ersten Verbindungssystems (214a) mit dem ersten backbordseitigen Gabelstück (212a) des ersten zentralen Beschlagteils (212) an einem ersten Anlenkpunkt (60a) auf der Backbordseite gelenkig verbunden ist, wobei das dritte Gabelstück (215b) des zweiten Verbindungssystems (214b) mit dem ersten steuerbordseitigen Gabelstück (212b) des ersten zentralen Beschlagteils (212) an einem ersten Anlenkpunkt (60b) auf der Steuerbordseite gelenkig verbunden ist, wobei das vierte Gabelstück (217a) des ersten Verbindungssystems (214a) mit dem zweiten steuerbordseitigen Gabelstück (205b) des zweiten zentralen Beschlagteils (204c) an einem zweiten Anlenkpunkt (62b) auf der Steuerbordseite gelenkig verbunden ist und wobei das vierte Gabelstück (217b) des zweiten Verbindungssystems (214b) mit dem zweiten backbordseitigen Gabelstück (205a) des zweiten zentralen Beschlagteils (204c) an einem zweiten Anlenkpunkt (62a) auf der Backbordseite gelenkig verbunden ist, und
- für jeden Anlenkpunkt (60a-b, 62a-b) einen Bolzen (216a-b), der in den Bohrungen der entsprechenden Gabelstücke angebracht ist.

2. Zentrales Befestigungssystem (206c) nach Anspruch 1, **dadurch gekennzeichnet, dass** wenigstens eines von dem ersten Verbindungssystem (214a) und dem zweiten Verbindungssystem (214b) die Form von zwei Stangen (90, 92) annimmt, die beiderseits des dem ersten zentralen Beschlagteil (212) zugeordneten ersten Gabelstücks (212a-b) und beiderseits des dem zweiten zentralen Beschlagteil (204c) zugeordneten zweiten Gabelstücks (205b-a) angeordnet sind, und dadurch, dass zusammen die zwei Stangen (90, 92) das dritte Gabelstück (215a-b) und das vierte Gabelstück (217a-b) des betreffenden Verbindungssystems (214a-b) bilden.

3. Zentrales Befestigungssystem (206c) nach einem der Ansprüche 1 oder 2, **dadurch gekennzeichnet, dass** wenigstens eines von dem ersten Verbindungssystem (214a) und dem zweiten Verbindungssystem (214b) die Form einer Stange annimmt, von der wenigstens ein erstes Ende die Form eines Gabelstück-Aufnahmeteils (94) annimmt, und dadurch, dass das Gabelstück-Aufnahmeteil (94) eines von dem dritten Gabelstück (215a-b) und dem vierten Gabelstück (217a-b) des betreffenden Verbindungssystems (214a-b) bildet.

4. Zentrales Befestigungssystem (206c) nach Anspruch 3, **dadurch gekennzeichnet, dass** ein zweites Ende der Stange, die von dem einen von dem ersten Verbindungssystem (214a) und dem zweiten Verbindungssystem (214b) gebildet wird, die Form eines Gabelstück-Steckteils (96) annimmt, und dadurch, dass dieses Gabelstück-Steckteil (96) das andere von dem vierten Gabelstück (217a-b) und dem dritten Gabelstück (215a-b) des betreffenden Verbindungssystems (214a-b) bildet.

5. Zentrales Befestigungssystem (206c) nach Anspruch 3, **dadurch gekennzeichnet, dass** ein zweites Ende der Stange, die von dem einen von dem ersten Verbindungssystem (214a) und dem zweiten Verbindungssystem (214b) gebildet wird, die Form eines Gabelstück-Aufnahmeteils annimmt, und dadurch, dass dieses Gabelstück-Aufnahmeteil das andere von dem vierten Gabelstück (217a-b) und dem dritten Gabelstück (215a-b) des betreffenden Verbindungssystems (214a-b) bildet.

6. Zentrales Befestigungssystem (206c) nach einem der Ansprüche 1 bis 5, **dadurch gekennzeichnet, dass** wenigstens eines von dem ersten Verbindungssystem (214a) und dem zweiten Verbindungssystem (214b) die Form einer Stange annimmt, von der jedes Ende die Form eines Gabelstück-Steckteils annimmt, und dadurch, dass eines der Gabelstück-Steckteile das eine von dem dritten Gabelstück (215a-b) und dem vierten Gabelstück (217a-b) des betreffenden Verbindungssystems (214ab) bildet und das andere der Gabelstück-Steckteile das andere von dem vierten Gabelstück (217a-b) und dem dritten Gabelstück (215a-b) des betreffenden Verbindungssystems (214a-b) bildet.

7. Luftfahrzeug (50), welches eine Tragfläche (52) mit einer Struktur (202), einen Pylon (56) mit einer Struktur (204) und ein Befestigungssystem nach einem der vorhergehenden Ansprüche umfasst, wobei das erste zentrale Beschlagteil (212) mit der Struktur (202) der Tragfläche (52) fest verbunden ist und wobei das zweite zentrale Beschlagteil (204c) mit der Struktur (204) des Pylons (56) fest verbunden ist.

## Claims

1. Central fastening system (206c) intended for fastening a structure (202) of a wing (52) of an aircraft (50) to a structure (204) of a pylon (56) of said aircraft (50), said central fastening system (206c) having a longitudinal direction (X) and having:
- a first central fitting (212) intended to be as one with the structure (202) of the wing (52) and having a first port-side clevis (212a) and a first starboard-side clevis (212b), wherein each first clevis (212a-b) has a bore of which the axis is parallel to the longitudinal direction (X),
- a second central fitting (204c) intended to be as one with the structure (204) of the pylon (56) and having a second port-side clevis (205a) and a second starboard-side clevis (205b), wherein each second clevis (205a-b) has a bore of which the axis is parallel to the longitudinal direction (X),
- a first connection system (214a) and a second connection system (214b), each having a third clevis (215a-b) and a fourth clevis (217a-b), wherein each third and fourth clevis (215a-b, 217a-b) has a bore of which the axis is parallel to the longitudinal direction (X), wherein the third clevis (215a) of the first connection system (214a) is mounted articulated with the first port-side clevis (212a) of the first central fitting (212) at a first articulation point (60a) on the port side, wherein the third clevis (215b) of the second connection system (214b) is mounted articulated with the first starboard-side clevis (212b) of the first central fitting (212) at a first articulation point (60b) on the starboard side, wherein the fourth clevis (217a) of the first connection system (214a) is mounted articulated with the second starboard-side clevis (205b) of the second central fitting (204c) at a second articulation point (62b) on the starboard side, and wherein the fourth clevis (217b) of the second connection system (214b) is mounted articulated with the second port-side clevis (205a) of the second central fitting (204c) at a second articulation point (62a) on the port side, and
- for each articulation point (60a-b, 62a-b), a pin (216a-b) mounted in the bores of the corresponding clevises.

2. Central fastening system (206c) according to Claim 1, **characterized in that** at least one out of the first connection system (214a) and the second connection system (214b) takes the form of two rods (90, 92) disposed on either side of the first clevis (212a-b) associated with the first central fitting (212) and on either side of the second clevis (205b-a) associated with the second central fitting (204c), and **in that**, together, the two rods (90, 92) form the third clevis (215a-b) and the fourth clevis (217a-b) of the connection system (214a-b) under consideration.

3. Central fastening system (206c) according to either of Claims 1 and 2, **characterized in that** at least one out of the first connection system (214a) and the second connection system (214b) takes the form of a rod of which a first end takes the form of a female clevis (94) and **in that** said female clevis (94) forms one out of the third clevis (215a-b) and the fourth clevis (217a-b) of the connection system (214a-b) under consideration.

4. Central fastening system (206c) according to Claims 3, **characterized in that** a second end of the rod realized by one out of the first connection system (214a) and the second connection system (214b) takes the form of a male clevis (96) and **in that** said male clevis (96) forms the other out of the fourth clevis (217a-b) and the third clevis (215a-b) of the connection system (214a-b) under consideration.

5. Central fastening system (206c) according to Claims 3, **characterized in that** a second end of the rod realized by one out of the first connection system (214a) and the second connection system (214b) takes the form of a female clevis and **in that** said female clevis forms the other out of the fourth clevis (217a-b) and the third clevis (215a-b) of the connection system (214a-b) under consideration.

6. Central fastening system (206c) according to one of Claims 1 to 5, **characterized in that** at least one out of the first connection system (214a) and the second connection system (214b) takes the form of a rod of which each end takes the form of a male clevis and **in that** one of the male clevises forms one out of the third clevis (215a-b) and the fourth clevis (217a-b) of the connection system (214a-b) under consideration, and the other of the male clevises forms the other out of the fourth clevis (217a-b) and the third clevis (215a-b) of the connection system (214a-b) under consideration.

7. Aircraft (50) having a wing (52) with a structure (202), a pylon (56) with a structure (204) and a fastening system according to one of the preceding claims, wherein the first central fitting (212) is as one with the structure (202) of the wing (52) and wherein the second central fitting (204c) is as one with the structure (204) of the pylon (56).
